(19) Europäisches Patentamt
European Patent Office
Office européen des brevets

(11) **EP 4 729 159 A1**

(12) **EUROPEAN PATENT APPLICATION**
published in accordance with Art. 153(4) EPC

(43) Date of publication:
**22.04.2026 Bulletin 2026/17**

(21) Application number: **24825647.1**

(22) Date of filing: **23.05.2024**

(51) International Patent Classification (IPC):
***B01D 69/02*** (2006.01) ***B01D 69/00*** (2006.01)
***B01D 69/10*** (2006.01) ***B01D 69/12*** (2006.01)
***B01D 71/08*** (2006.01) ***B01D 71/38*** (2006.01)
***B01D 71/40*** (2006.01) ***B01D 71/44*** (2006.01)
***B01D 71/52*** (2006.01) ***B01D 71/60*** (2006.01)

(52) Cooperative Patent Classification (CPC):
Y02C 20/40

(86) International application number:
**PCT/JP2024/019003**

(87) International publication number:
**WO 2024/262240 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.06.2023 JP 2023100146**

(71) Applicants:
- **NATIONAL UNIVERSITY CORPORATION KYOTO INSTITUTE OF TECHNOLOGY**
  **Kyoto-shi, Kyoto 606-8585 (JP)**
- **Tosoh Corporation**
  **Yamaguchi 746-8501 (JP)**
- **KITZ Micro Filter Corporation**
  **Chino-shi, Nagano 391-8566 (JP)**

(72) Inventors:
- **TANIGUCHI, Ikuo**
  **Kyoto-shi, Kyoto 606-8585 (JP)**
- **INOUE, Hiroshi**
  **Yokkaichi-shi, Mie 510-8540 (JP)**
- **HARADA, Yuki**
  **Yokkaichi-shi, Mie 510-8540 (JP)**
- **SAKAI, Toshihisa**
  **Chino-shi, Nagano 391-8566 (JP)**

(74) Representative: **Novagraaf International SA**
**Chemin de l'Echo 3**
**1213 Onex, Geneva (CH)**

# (54) CARBON DIOXIDE SEPARATION MEMBRANE, METHOD FOR PRODUCING CARBON DIOXIDE SEPARATION MEMBRANE, METHOD FOR SEPARATING CARBON DIOXIDE, AND CARBON DIOXIDE SEPARATION MEMBRANE MODULE

(57) Provided is a carbon dioxide separation membrane including a porous membrane having an air permeation flux of 10,000 GPU or more, and a separation functional layer formed on a surface of the porous membrane, wherein the separation functional layer is formed of a composition that contains a water-soluble polymer having no crosslinked structure and an amine compound having molecular weight of 500 or less.

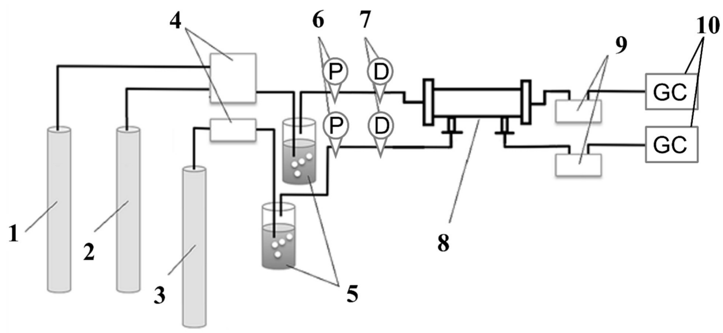


EP 4 729 159 A1

## Description

### TECHNICAL FIELD

The present disclosure relates to a carbon dioxide separation membrane that selectively separates carbon dioxide from a carbon dioxide-containing mixed gas, a method for producing the carbon dioxide separation membrane, a method for separating carbon dioxide using the carbon dioxide separation membrane, and a carbon dioxide separation membrane module using the carbon dioxide separation membrane.

### BACKGROUND ART

Conventionally, it is known that polymer materials each have a unique gas permeability and, therefore, gas components can be separated using a membrane made from such a polymer material (see, for example, Non-Patent Document 1). Gas separation membranes utilizing this property are an energy-saving and space-saving separation technology and are used in various fields.

In recent years, attention has been drawn to technologies for separating and capturing carbon dioxide, which is a cause of global warming, before it is emitted into the atmosphere from large-scale sources such as thermal power plants and steelworks blast furnaces. As such a technology, a process in which carbon dioxide is absorbed by an amine and then desorbed by heating has reached a practical level. However, there is a problem in that the desorption of carbon dioxide requires heating and the capturing cost is thus high.

In order to overcome the above problem, carbon dioxide separation and capturing processes based on membrane separation have been proposed. Particularly, those processes using polymer membranes are drawing attention since polymer membranes are easy to chemically modify and modularize and can be mass-produced, allowing cost reduction. However, at present, there has been no case of practical application of such a process, and the use of such a process remains in pilot-level studies (see, for example, Non-Patent Document 2). The reason why practical application has not been achieved is because, for example, the carbon dioxide permeation rate and the carbon dioxide selectivity are both low, and the required properties have not been satisfied.

In order to improve the carbon dioxide selectivity, facilitated transport membranes are being studied and developed. Facilitated transport membranes are membranes in which a substance (carrier) that reacts reversibly and selectively only with a specific permeation material is incorporated. The permeation material can permeate by way of a dissolution and diffusion mechanism through the membrane matrix as well as formation of a reaction product with the carrier; therefore, it can provide higher selectivity as compared to co-existing components other than the permeation material that permeate only by the dissolution and diffusion mechanism. As such facilitated transport membranes, the following have been disclosed: a polymer membrane in which a gel layer formed of a polyvinyl alcohol-polyacrylic acid copolymer gel membrane and 2,3-diaminopropionic acid is supported on a hydrophilic ultrafiltration membrane (see, for example, Patent Document 1); a polymer membrane containing a water-soluble polymer and a specific amine compound (see, for example, Patent Document 2); and a polymer membrane formed of a polyamide amine dendrimer that is a substance having affinity for carbon dioxide, and a polyethylene glycol crosslinked body obtained by photocrosslinking polymerization of polyethylene glycol dimethacrylate (see, for example, Patent Document 3).

### PRIOR ART DOCUMENTS

### PATENT DOCUMENTS

Patent Document 1: JP 2008-36463 A
Patent Document 2: JP 2018-144022 A
Patent Document 3: JP 2009-185118 A

### NON-PATENT DOCUMENTS

Non-Patent Document 1: "New Developments in Gas Separation Technology" edited by Toray Research Center Research and Development Department, Toray Research Center, Inc., 1990, p.345-362
Non-Patent Document 2: Journal of Membrane Science, 2010, Vol. 359, Issue 1-2, p.126-139

SUMMARY OF INVENTION

TECHNICAL PROBLEM

However, in order to reduce the carbon dioxide capturing cost, even higher carbon dioxide selectivity is required, and an improvement in the performance of polymer membranes is desired.

An object of the present disclosure is to provide a carbon dioxide separation membrane that has a large carbon dioxide permeation flux and exhibits a high carbon dioxide selectivity. Another object of the present disclosure is to provide a method for producing the carbon dioxide separation membrane, a method for separating carbon dioxide using the carbon dioxide separation membrane, and a carbon dioxide separation membrane module using the carbon dioxide separation membrane.

SOLUTION TO PROBLEM

The present inventors intensively studied to discover that, in a carbon dioxide separation membrane having a porous membrane and a separation functional layer formed on a surface of the porous membrane, the above-described problems can be solved by using a porous membrane having an air permeation flux of a specific value or more and a separation functional layer having a specific composition.

That is, the gist of the present disclosure is as follows.

[1] A carbon dioxide separation membrane, comprising:

a porous membrane having an air permeation flux of 10,000 GPU or more; and
a separation functional layer formed on a surface of the porous membrane,
wherein the separation functional layer is formed of a composition that comprises a water-soluble polymer having no crosslinked structure and an amine compound having molecular weight of 500 or less.

[2] The carbon dioxide separation membrane according to [1], wherein the water-soluble polymer having no crosslinked structure is at least one selected from the group consisting of polyvinyl alcohol, poly(meth)acrylic acid, polyethylene glycol, polyvinylpyrrolidone, polyethyleneimine, polyallylamine, polysaccharides, and salts and copolymers thereof.

[3] The carbon dioxide separation membrane according to [1] or [2], wherein the amine compound having molecular weight of 500 or less is at least one selected from the group consisting of a compound represented by the following Formula (1) and a compound represented by the following Formula (2):

[Chem. 1]

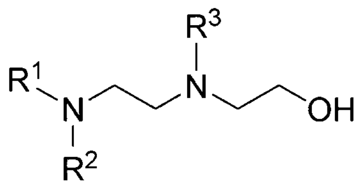

(1)

in Formula (1), $R^1$, $R^2$, and $R^3$ each independently represents a hydrogen atom, an alkyl group having 1 to 4 carbon atoms, or a hydroxyethyl group;

[Chem. 2]

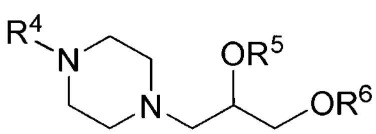

(2)

in Formula (2), $R^4$, $R^5$, and $R^6$ each independently represents a hydrogen atom or an alkyl group having 1 to 4 carbon atoms.

[4] The carbon dioxide separation membrane according to any one of [1] to [3], wherein

the porous membrane is a hollow fiber membrane, and
the separation functional layer is formed on one or both of an outer surface and an inner surface of the hollow fiber membrane.

[5] A method for producing the carbon dioxide separation membrane according to any one of [1] to [4], the method comprising:

the retention step of bringing a solution that comprises the water-soluble polymer having no crosslinked structure, the amine compound having molecular weight of 500 or less, and a solvent into contact with the porous membrane to retain the solution on a surface of the porous membrane; and

the drying step of removing the solvent from the solution retained on the porous membrane.

[6] A method for separating carbon dioxide, the method comprising the separation step of bringing a mixed gas comprising carbon dioxide into contact with one end of the carbon dioxide separation membrane according to any one of [1] to [4], and allowing the carbon dioxide contained in the mixed gas to permeate to the other end side of the carbon dioxide separation membrane.
[7] A carbon dioxide separation membrane module, comprising the carbon dioxide separation membrane according to any one of [1] to [4].

ADVANTAGEOUS EFFECTS OF INVENTION

According to the present disclosure, a carbon dioxide separation membrane that has a large carbon dioxide permeation flux and exhibits a high carbon dioxide selectivity can be provided. Further, according to the present disclosure, a method for producing the carbon dioxide separation membrane, a method for separating carbon dioxide using the carbon dioxide separation membrane, and a carbon dioxide separation membrane module using the carbon dioxide separation membrane can be provided.

BRIEF DESCRIPTION OF THE DRAWINGS

[Fig. 1] FIG. 1 is a schematic drawing of the gas separation apparatus used in Examples and Comparative Examples.

DESCRIPTION OF EMBODIMENTS

The present disclosure will now be described in detail.
The carbon dioxide separation membrane according to a first embodiment of the present disclosure is characterized in that it includes a porous membrane having an air permeation flux of 10,000 GPU or more and a separation functional layer formed on a surface of the porous membrane, and that the separation functional layer is formed of a composition that contains a water-soluble polymer having no crosslinked structure and an amine compound having molecular weight of 500 or less.
Usually, in gas separation membranes formed of polymer materials, the permeation flux and the selectivity of a gas are in a trade-off relationship, and membranes with high permeation flux have low selectivity. In contrast, the carbon dioxide separation membrane according to the present embodiment has both high permeation flux and high selectivity of carbon dioxide, and is thus extremely practical. In addition, the carbon dioxide separation membrane according to the present embodiment exhibits exceptional stability since an amine compound having a carbon dioxide separation capacity is incorporated therein rather than being supported thereon.
The porous membrane used in the present embodiment is preferably an ultrafiltration membrane and, in the case of an ultrafiltration membrane, it has molecular weight cut-off of preferably 500,000 or less, more preferably 500 to 200,000, and may be a composite membrane composed of plural layers. When the molecular weight cut-off is in the above-described range, the interface between the separation functional layer formed on the surface of the porous membrane and the porous membrane is clear, and the diffusion of the water-soluble polymer having no crosslinked structure into the porous membrane is inhibited; therefore, it is believed that the gas permeation resistance is reduced, and the carbon dioxide permeation flux is improved. When the porous membrane is an ultrafiltration membrane, the fractionation characteristics are defined by the molecular weight cut-off, and although the average pore size is not particularly defined, it is preferably about 1 to 50 nm. In the present embodiment, several kinds of marker molecules having different molecular

weights are introduced to the porous membrane to measure the rejection rate, and the molecular weight at which the rejection rate is 90% is defined as the molecular weight cut-off of the membrane. As the marker molecules, proteins such as insulin, cytochrome c, and pepsin are used.

The porous membrane used in the present embodiment has an air permeation flux of 10,000 GPU or more, preferably 10,000 to 500,000 GPU, more preferably 20,000 to 200,000 GPU, still more preferably 20,000 to 100,000 GPU. The permeation flux is a value obtained by dividing the permeation rate of a fluid by the membrane area and the transmembrane pressure. In the present embodiment, the air permeation flux is determined by measuring the air permeation amount using a mass flow meter and dividing the thus measured value by the membrane area. It is believed that, in a porous membrane having a permeation flux in the above-described range, because of a high surface opening ratio, the gas permeation resistance is reduced and the carbon dioxide permeation flux is improved. The "GPU" used herein is the unit of permeation flux and expressed as 1 GPU = $7.5 \times 10^{-12}$ $m^3$ (STP)/($m^2 \cdot s \cdot Pa$). The reason why the carbon dioxide selectivity is affected by the porous membrane serving as a substrate is not clear; however, the carbon dioxide permeation selectivity of the carbon dioxide separation membrane is improved by using a porous membrane having an air permeation flux of 10,000 GPU or more.

The shape of the porous membrane includes a flat sheet membrane and a hollow fiber membrane and, particularly, a hollow fiber membrane is preferred. When the porous membrane is a flat membrane, the thickness thereof is preferably 10 to 3,000 μm, more preferably 50 to 500 μm. A flat membrane is preferred since it ensures low permeation resistance and sufficient mechanical strength as long as it has the above-described thickness. Meanwhile, when the porous membrane is a hollow fiber membrane, the inner diameter of its hollow fibers (hereinafter, may be referred to as "membrane inner diameter") is preferably 100 to 3,000 μm, and the thickness of the membrane is preferably 25 to 300 μm. It is noted here that the thickness of the porous membrane and that of the separation functional layer are measured by observation under a scanning electron microscope (SEM).

The structure of the porous membrane is not particularly limited; however, an asymmetric structure in which a surface layer portion constitutes a dense layer having a small pore diameter while a lower layer portion constitutes a support layer having a large pore size is preferred since it can reduce the permeation resistance and increase the permeation flux. Further, a cross-section of the porous membrane has a porosity of preferably 60 to 90%, more preferably 70 to 85%. The porosity of the porous membrane is determined by mercury intrusion porosimetry or image analysis of the membrane cross-section using a scanning electron microscope.

The material of the porous membrane is not particularly limited, and examples thereof include: polyolefins, such as polyethylene and polypropylene; fluorine-containing polymers, such as polytetrafluoroethylene, polyvinyl fluoride, and polyvinylidene fluoride; chlorine-containing polymers, such as polyvinyl chloride and polyvinylidene chloride; vinyl polymers, such as polystyrene, polyacrylonitrile, and polymethyl methacrylate; condensation polymers, such as polysulfone, polyether sulfone, polyether imide, polyamide, polyurethane, and polyimide; and polysaccharides, such as cellulose acetate and chitosan.

The separation functional layer used in the present embodiment is formed of a composition that contains a water-soluble polymer having no crosslinked structure and an amine compound having molecular weight of 500 or less, and is formed on a surface of the porous membrane. This composition is preferably a homogeneous composition. This is because the carbon dioxide separation membrane in which the separation functional layer is formed from a homogeneous composition exhibits a further improved stability since a greater amount of the amine compound having molecular weight of 500 or less is incorporated into the membrane. Further, the composition constituting the separation functional layer preferably consists of only a water-soluble polymer having no crosslinked structure and an amine compound having molecular weight of 500 or less; however, may contain other components in addition to the water-soluble polymer having no crosslinked structure and the amine compound having molecular weight of 500 or less, as long as the above-described effects are not impaired. When the composition contains other components, the content thereof in the composition is preferably 30% by weight or less.

When the porous membrane is a flat membrane having an asymmetric structure, the separation functional layer is formed on the surface of a dense layer having a small pore size. When the porous membrane is a hollow fiber membrane, the separation functional layer is preferably formed on one or both of an outer surface and an inner surface of the hollow fiber membrane, and it is more preferred that the separation functional layer be formed on the inner surface since this allows uniform formation of the separation functional layer, and the separation functional layer is unlikely to be damaged even when the membrane comes into contact with each other. The thickness of the separation functional layer is not particularly limited; however, it is preferably in a range of 0.1 to 10.0 μm. When the thickness of the separation functional layer is in this range, the amine compound having molecular weight of 500 or less that is contained in the membrane can be stably retained, so that durability can be ensured. Further, when the thickness is 10.0 μm or less, the carbon dioxide permeation flux can be increased, which is preferred.

The water-soluble polymer having no crosslinked structure that constitutes the separation functional layer is not particularly limited as long as it is a polymer that can dissolve in water and form a film when dried; however, a water-soluble polymer having no crosslinked structure, which exhibits excellent affinity with the amine compound having molecular

weight of 500 or less that coexists in the separation functional layer, is preferred. The term "water-soluble polymer having no crosslinked structure" used herein refers to a linear or branched water-soluble polymer in which polymers are not bound to each other via a covalent bond or an ionic bond. Since such a polymer with no crosslinked structure has high molecular mobility, the use thereof in the separation functional layer increases the carbon dioxide diffusion coefficient in the separation functional layer, and this leads to an increase in the permeation flux of the separation membrane, which is preferred. Examples of such a water-soluble polymer having no crosslinked structure include polyvinyl alcohols, poly(meth)acrylic acid, polyethylene glycol, polyvinylpyrrolidone, polyethyleneimine, polyallylamine, and polysaccharides, as well as salts, copolymers, and blends thereof. Among these water-soluble polymers having no crosslinked structure, a polyvinyl alcohol is preferably used since it has a high film strength and a high affinity with an amine compound having molecular weight of 500 or less. In the present disclosure, "(meth)acrylic acid" means either or both of acrylic acid and methacrylic acid.

The molecular weight of the water-soluble polymer having no crosslinked structure varies greatly depending on the type of the water-soluble polymer having no crosslinked structure to be used; however, it is preferably in a range of 10,000 to 1,000,000 in terms of weight-average molecular weight. When the weight-average molecular weight is in this range, not only the mechanical strength of the separation functional layer can be ensured, but also the solution viscosity during coating is in an appropriate range and the separation functional layer thus has a uniform thickness, which is preferred. The weight-average molecular weight of the water-soluble polymer having no crosslinked structure is measured by size exclusion chromatography.

The amine compound having molecular weight of 500 or less, which is the other component constituting the separation functional layer, is a carrier component that plays a role in adsorbing, transporting, and desorbing carbon dioxide in the carbon dioxide separation membrane according to the present embodiment. When the molecular weight of the amine compound is 500 or less, the molecular mobility is high, and the diffusion of carbamic acid generated by reaction between the amine compound and carbon dioxide is accelerated in the separation functional layer; therefore, the carbon dioxide permeation flux is increased, so that an improvement in the performance of the separation membrane can be achieved. Examples of an amine compound having molecular weight of 500 or less that can be preferably used in the present embodiment include an amine compound represented by the following Formula (1) and an amine compound represented by the following Formula (2).

[Chem. 3]

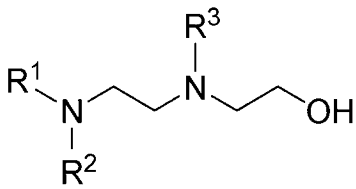

(1)

(in Formula (1), $R^1$, $R^2$, and $R^3$ each independently represents a hydrogen atom, an alkyl group having 1 to 4 carbon atoms, or a hydroxyethyl group)

[Chem. 4]

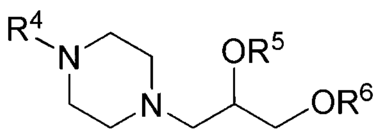

(2)

(in Formula (2), $R^4$, $R^5$, and $R^6$ each independently represents a hydrogen atom or an alkyl group having 1 to 4 carbon atoms)

Examples of the alkyl groups having 1 to 4 carbon atoms for $R^1$ to $R^3$ of the amine compounds represented by Formula (1) and $R^4$ to $R^6$ of the amine compounds represented by Formula (2) include a methyl group, an ethyl group, an n-propyl group, an isopropyl group, an n-butyl group, an isobutyl group, a see-butyl group, and a tert-butyl group.

Examples of the amine compound having molecular weight of 500 or less that is used in the present embodiment include: N-(2-aminoethyl)ethanolamine, N-[2-(dimethylamino)ethyl]-N-methylethanolamine, N-[2-(diethylamino)ethyl] ethanolamine, N-(1,2-dihydroxy-n-propyl)piperazine, N-[(1-hydroxymethyl-2-hydroxy)-n-propyl]piperazine, N-[(1-hydroxy-2-hydroxymethyl)-n-propyl]piperazine, N-(1,2-dihydroxy-n-propyl)-N'-methyl-piperazine, N-[1,2-bis(hydroxymethyl)-n-propyl]piperazine, N-[1,2-bis(hydroxymethyl)-n-propyl]-N'-methylpiperazine, diethylenetriamine (DETA);

triethylenetetramine (TETA), such as 1,4,7,10-tetraazadecane, N,N-bis(2-aminoethyl)-1,2-ethanediamine, 1-[2-[(2-aminoethyl)amino]ethyl]-piperazine, and 1,4-bis(2-aminoethyl)-piperazine; tetraethylenepentamine (TEPA), such as 1,4,7,10,13-pentaazatridecane, N,N,N'-tris(2-aminoethyl)-1,2-ethanediamine, 1-[2-[2-[2-[(2-aminoethyl)amino]ethyl]amino]ethyl]-piperazine, 1-[2-[bis(2-aminoethyl)amino]ethyl]-piperazine, and bis[2-(1-piperazinyl)ethyl]amine; and pentaethylenehexamine (PEHA), such as 1,4,7,10,13,16-hexaazahexadecane, N,N,N',N'-tetrakis(2-aminoethyl)-1,2-ethanediamine, N,N-bis(2-aminoethyl)-N'-[2-[(2-aminoethyl)amino]ethyl]-1,2-ethanediamine, 1-[2-[2-[2-[2-[2-[(2-aminoethyl)amino]ethyl]amino]ethyl]amino]ethyl]-piperazine, 1-[2-[2-[2-[bis(2-aminoethyl)amino]ethyl]amino]ethyl]-piperazine, and N,N'-bis[2-(1-piperazinyl)ethyl]-1,2-ethanediamine. Thereamong, the amine compound having molecular weight of 500 or less is preferably N-(2-aminoethyl)ethanolamine, N-[2-(dimethylamino)ethyl]-N-methylethanolamine, N-[2-(diethylamino)ethyl]ethanolamine, N-(1,2-dihydroxy-n-propyl)piperazine, N-[(1-hydroxymethyl-2-hydroxy)-n-propyl]piperazine, N-[(1-hydroxy-2-hydroxymethyl)-n-propyl]piperazine, N-(1,2-dihydroxy-n-propyl)-N'-methyl-piperazine, N-[1,2-bis(hydroxymethyl)-n-propyl]piperazine, or N-[1,2-bis(hydroxymethyl)-n-propyl]-N'-methyl-piperazine, particularly preferably N-(2-aminoethyl)ethanolamine or N-(1,2-dihydroxy-n-propyl)piperazine.

The separation functional layer in the present embodiment is formed of a composition that contains a water-soluble polymer having no crosslinked structure and an amine compound having molecular weight of 500 or less. The content ratio of these components is not particularly limited; however, the content of the amine compound having molecular weight of 500 or less is preferably 2 to 95% by weight, more preferably 30 to 90% by weight, with respect to a total content of the water-soluble polymer having no crosslinked structure and the amine compound having molecular weight of 500 or less.

Next, the method for producing a carbon dioxide separation membrane according to a second embodiment of the present disclosure will be described.

The method for producing a carbon dioxide separation membrane according to the present embodiment is a method for producing the carbon dioxide separation membrane according to the first embodiment of the present disclosure, and is characterized by including: the retention step of bringing a solution, which is obtained by dissolving the water-soluble polymer having no crosslinked structure and the amine compound having molecular weight of 500 or less in a solvent, into contact with the porous membrane to retain the solution on a surface of the porous membrane; and the drying step of removing the solvent from the solution retained on the porous membrane.

The solvent used in the present embodiment is not particularly limited as long as it dissolves both the amine compound having molecular weight of 500 or less and the water-soluble polymer having no crosslinked structure and does not react; however, from the standpoint of solubility, at least one selected from the group consisting of water, methanol, ethanol, propanol, ethylene glycol, acetone, dimethylacetamide, dimethyl sulfoxide, tetrahydrofuran, and dioxane is used. Thereamong, water, methanol, ethanol, propanol, and ethylene glycol are preferred solvents, and water is particularly preferred.

A mixing method for the preparation of the solution is not particularly limited, and any known method can be employed. Examples thereof include stirring using a stirring blade, stirring using a stirrer and a stirring bar, stirring using a shaker, stirring using a roller mixer, and stirring with ultrasonic waves (homogenizer). As for the stirring conditions, for example, in the case of stirring using a stirring blade, the rotation speed of the stirring blade is usually in a range of 1 to 1,000 rpm, preferably in a range of 10 to 400 rpm.

A mixing order is also not particularly limited and, for example, it is preferred to sufficiently dissolve the water-soluble polymer having no crosslinked structure in the solvent, and then add and mix the amine compound having molecular weight of 500 or less. By mixing the water-soluble polymer having no crosslinked structure in a sufficiently dissolved state with the amine compound having molecular weight of 500 or less, not only an increase in the time required for dissolution due to the formation of coarse particles but also deterioration of the uniformity during film formation can be inhibited. Further, in the preparation of the solution, the water-soluble polymer having no crosslinked structure and the amine compound having molecular weight of 500 or less may be mixed with heating. The heating temperature is not particularly limited as long as it is equal to or higher than the temperature at which the above-described components are each solidified and is equal to or lower than the temperature at which the components each decompose, boil, or react; however, the heating temperature is usually in a range of 30 to 100°C, preferably in a range of 30 to 80°C.

The concentration of the solution is not particularly limited as long as the solution has an appropriate fluidity, and a total concentration of the water-soluble polymer having no crosslinked structure and the amine compound having molecular weight of 500 or less can be selected in a range of 0.05 to 10% by weight. The content ratio of the water-soluble polymer having no crosslinked structure and the amine compound having molecular weight of 500 or less is also not particularly limited; however, the content of the amine compound having molecular weight of 500 or less is preferably 2 to 95% by weight, more preferably 30 to 90% by weight, with respect to a total content of the water-soluble polymer having no crosslinked structure and the amine compound having molecular weight of 500 or less.

In the method for producing a carbon dioxide separation membrane according to the present embodiment, as a method for bringing the solution of the water-soluble polymer having no crosslinked structure and the amine compound having molecular weight of 500 or less into contact with the porous membrane, when the porous membrane is a flat

membrane, for example, a spin coating method, a bar coating method, a die coating method, a blade coating method, a knife coating method, a gravure coating method, a roll coating method, a spray coating method, a dip coating method, a casting method, a comma roll method, a kiss coating method, a screen printing method, an ink-jet printing method, or a spin coating method can be employed. When the porous membrane is a hollow fiber membrane, for example, a dip coating method or a circulating coating method can be employed. The term "circulating coating method" used herein refers to a method in which a solution containing the water-soluble polymer having no crosslinked structure, the amine compound having molecular weight of 500 or less, and the solvent is passed through and circulated in the hollow fiber membrane to form a separation functional layer as a dynamic layer on the inner side (inner surface) or the outer side (outer surface) of the hollow fiber membrane.

In the retention step, the amount of the solution to be retained on the surface of the porous membrane may be adjusted as appropriate in accordance with the desired thickness of the separation functional layer of the carbon dioxide separation membrane and, usually, the solution may be retained such that the thickness of the separation functional layer after drying is in a range of 0.01 to 50 $\mu$m, preferably 0.05 to 10 $\mu$m.

In the drying step, the drying conditions for removing the solution retained on the porous membrane to form the separation functional layer are not particularly limited and, for example, a method for drying the solution under reduced pressure in the atmosphere or in a non-oxidizing atmosphere such as helium, argon, or nitrogen may be employed. The drying temperature and the drying time are also not particularly limited and can be selected as appropriate, as long as the solvent is volatilized at an appropriate rate while the amine compound having molecular weight of 500 or less is not dissipated. Specifically, the drying temperature is 20 to 150°C, and the drying time is about 5 minutes to 48 hours.

Next, the method for separating carbon dioxide according to a third embodiment of the present disclosure will be described.

The method for separating carbon dioxide according to the present embodiment is characterized by including the separation step of bringing a mixed gas containing carbon dioxide into contact with one end of the separation functional layer of the carbon dioxide separation membrane according to the first embodiment of the present disclosure, and allowing the carbon dioxide contained in the mixed gas to permeate to the other end side of the carbon dioxide separation membrane. When a hollow fiber membrane module in which a separation functional layer is formed on the inner side of a hollow fiber membrane is used for separating carbon dioxide, a mixed gas containing carbon dioxide is introduced to a primary side leading to the inner side of the hollow fiber membrane of the hollow fiber membrane module, and the carbon dioxide contained in the mixed gas is allowed to permeate to a secondary side leading to the outer space of the hollow fiber membrane.

In the separation method according to the present embodiment, it is preferred to provide a pressure difference between the gas supply side and the gas permeation side of the separation membrane. This pressure difference is provided by increasing the pressure on the gas supply side of the separation membrane, or by reducing the pressure on the gas permeation side. The separation method according to the present embodiment is desirably performed under a temperature condition of usually 5 to 140°C, preferably 20 to 100°C.

A mixed gas that can be applied to the separation method according to the present embodiment is not particularly limited as long as it contains carbon dioxide; however, in order to improve the separation performance between carbon dioxide and other gases, it is desirable to adjust the relative humidity of the mixed gas to be 30% or higher, preferably 60 to 100%.

In the present embodiment, the value of the separation selectivity between carbon dioxide and nitrogen at 40°C, which is calculated by the following Equation (3), is preferably 100 or more. An upper limit value of the separation selectivity between carbon dioxide and nitrogen at 40°C is not particularly limited since the larger the value of the separation selectivity, the superior the separation performance of the membrane; however, the membrane preferably exhibits a separation selectivity that is appropriate in terms of the balance with the permeation flux. Specific examples of the upper limit value include, but not limited to, 1,000 or less.

$$CO_2/N_2 \text{ separation selectivity} = (CO_2 \text{ gas permeability})/(N_2 \text{ gas permeability}) \quad (3)$$

The separation selectivity between carbon dioxide and nitrogen that is represented by Equation (3) may be denoted as "carbon dioxide selectivity coefficient $\alpha$". The carbon dioxide selectivity coefficient $\alpha$ is calculated by the equation described below in the section of Examples, and it is the same value as the separation selectivity between carbon dioxide and nitrogen that is represented by Equation (3).

In the separation method according to the present embodiment, there is absolutely no problem in additionally performing steps other than the separation step. For example, the cooling step, the heating step, the washing step, the extraction step, the ultrasonication step, the distillation step, and other step of performing a treatment with a chemical solution may be performed as appropriate.

The separation method according to the present embodiment can be applied to, for example, separation of carbon dioxide from combustion exhaust gases generated in thermal power plants, steel plants, cement factories, and the

like. The separation method according to the present embodiment can also be applied to refinement of light hydrocarbons in natural gas fields, as well as purification of methane contained in biogases.

Next, the carbon dioxide separation membrane module according to a fourth embodiment of the present disclosure will be described.

The carbon dioxide separation membrane module according to the present embodiment is a module in which the carbon dioxide separation membrane according to the first embodiment of the present disclosure is housed in a housing. When the carbon dioxide separation membrane is a flat membrane, specific examples of the carbon dioxide separation membrane module include: a stacked-type module in which the membrane is laminated as is, or a stacked-type module in which membrane elements are fabricated from membranes and stacked; a pleated module in which the flat membrane is folded and housed in a cylindrical container; a pleated-type module in which the flat membrane is folded and housed in a cylindrical container; and a spiral-type module in which the flat membrane is bonded in an envelope shape with a permeation-side spacer (net) being sandwiched, and this envelop is wrapped around an axis that is a permeation flow path via a supply-side spacer. Meanwhile, when the carbon dioxide separation membrane is a tube-shaped, pipe-shaped, or hollow fiber membrane, examples of the carbon dioxide separation membrane module include a tubular module and a hollow fiber membrane module, in which such membranes are bundled. Further, when the carbon dioxide separation membrane is of a monolith-type, examples of the carbon dioxide separation membrane module include a tubular module in which monolith-type elements are bundled.

## EXAMPLES

The present disclosure will now be described in more detail by way of Examples; however, the present disclosure is not limited thereto.

### <Production of Carbon Dioxide Separation Membrane Module>

### (Example 1)

As a water-soluble polymer, 3 g of polyvinyl alcohol (molecular weight: about 60,000, manufactured by Sigma-Aldrich Co., LLC) was dissolved in 582 g of pure water, and 15 g of N-(2-aminoethyl)ethanolamine (manufactured by Tokyo Chemical Industry Co., Ltd.) as an amine compound having molecular weight of 500 or less was subsequently added to prepare a mixed solution.

Then, the thus obtained mixed solution was introduced to a primary side leading to the inside of a hollow fiber membrane of a hollow fiber membrane module (manufactured by KITZ Micro Filter Corporation, membrane inner diameter: 0.36 mm, molecular weight cut-off: 10,000, air permeation flux: 29,000 GPU; hereinafter, referred to as "ultrafiltration membrane module 1") and passed through the module for 10 minutes. Thereafter, this solution-treated hollow fiber membrane module was dried at 20°C in the atmosphere for 24 hours to obtain a hollow fiber membrane module in which a separation functional layer was formed on the inner side of the hollow fiber membrane. The separation functional layer had a thickness of 0.7 μm as measured using SEM. The thus obtained carbon dioxide separation membrane module is hereinafter referred to as "separation membrane module 1".

### (Example 2)

A carbon dioxide separation membrane module was produced in the same manner as in Example 1, except that a hollow fiber membrane module having an air permeation flux of 61,000 GPU (manufactured by KITZ Micro Filter Corporation, membrane inner diameter: 0.64 mm, molecular weight cut-off: 10,000; hereinafter, referred to as "ultrafiltration membrane module 2") was used as the hollow fiber membrane module. The separation functional layer formed on the inner side of the hollow fiber membrane had a thickness of 0.8 μm. The thus obtained carbon dioxide separation membrane module is hereinafter referred to as "separation membrane module 2".

### (Comparative Example 1)

A carbon dioxide separation membrane module was produced in the same manner as in Example 1, except that a hollow fiber membrane module having an air permeation flux of 6,700 GPU (manufactured by KITZ Micro Filter Corporation, membrane inner diameter: 0.64 mm, molecular weight cut-off: 10,000; hereinafter referred to as "ultrafiltration membrane module 3") was used in place of the ultrafiltration membrane module 1. The separation functional layer formed on the inner side of the hollow fiber membrane had a thickness of 0.3 μm. The thus obtained carbon dioxide separation membrane module is hereinafter referred to as "separation membrane module 3".

(Comparative Example 2)

A carbon dioxide separation membrane module was produced in the same manner as in Example 1, except that a hollow fiber membrane module having an air permeation flux of 7,200 GPU (manufactured by KITZ Micro Filter Corporation, membrane inner diameter: 0.70 mm, molecular weight cut-off: 10,000; hereinafter referred to as "ultrafiltration membrane module 4") was used in place of the ultrafiltration membrane module 1. The separation functional layer formed on the inner side of the hollow fiber membrane had a thickness of 0.3 μm. The thus obtained carbon dioxide separation membrane module is hereinafter referred to as "separation membrane module 4".

<Separation Test of Carbon Dioxide and Coexisting Gas>

The carbon dioxide separation capacity was measured using each of the carbon dioxide separation membrane modules (separation membrane modules 1 to 4) that were produced in Examples 1 and 2 and Comparative Examples 1 and 2. It is noted here that, in the following description and equations, carbon dioxide and nitrogen are abbreviated as $CO_2$ and $N_2$, respectively.

FIG. 1 schematically illustrates a gas separation apparatus used for the measurement of the carbon dioxide separation capacity. In the gas separation apparatus illustrated in FIG. 1, $CO_2$ and $N_2$ are supplied from a $CO_2$ gas cylinder 1 and an $N_2$ gas cylinder 2, respectively, to prepare a mixed gas ($CO_2$: 10%, $N_2$: 90%). This mixed gas is controlled to have a prescribed gas flow rate by a flow control meter 4 and adjusted to have a relative humidity of 90% by a humidifier 5, and then supplied to a carbon dioxide separation membrane module 8 at a prescribed pressure. In addition, helium supplied from a helium gas cylinder 3 is humidified by the humidifier 5, and the resulting sweep gas is supplied to the permeation side of the carbon dioxide separation membrane module 8 at a prescribed pressure. The relative humidity of the mixed gas and the sweep gas are measured by a dew point meter 7, and the pressures of the mixed gas and the sweep gas that are supplied to the carbon dioxide separation membrane module 8 are measured by a pressure gauge 6. The gas discharged from the carbon dioxide separation membrane module 8 is dried by a dehumidification trap 9 and then introduced into a gas chromatograph 10. Thereafter, the permeation fluxes Q ($CO_2$) and Q ($N_2$) (unit: 1 GPU = $7.5 \times 10^{-12}$ $m^3$ (STP)/(s·$m^2$·Pa)) of the gases permeated through the carbon dioxide separation membrane module 8 are measured by the gas chromatograph 10 and a flow meter (not illustrated). The measurement conditions are as follows, and the permeation flux is calculated according to the following equation (4).

Table 1 shows the permeability coefficient of each carbon dioxide separation membrane module measured by the gas separation apparatus illustrated in FIG. 1, and the carbon dioxide selectivity coefficient $\alpha(CO_2/N_2)$ = $(Q(CO_2)/Q(N_2))$ of each carbon dioxide separation membrane module that was calculated from the permeation fluxes.
[Math. 1]

$$Q_i = \frac{n_i}{t} \cdot \frac{1}{A \cdot \Delta p_i} \qquad (4)$$

(wherein, Q represents a permeation flux; n represents a gas volume; A represents a membrane area; t represents time; Δp means a difference between the supply-side partial pressure and the permeation-side partial pressure; and the subscript i represents each gas).

[Gas Permeation Measurement Conditions]

Amount of supplied gas: 450 mL/min
Measurement temperature: 40°C
Composition of supplied gas: $CO_2/N_2$ = 10/90 (vol/vol)
Permeation-side sweep gas: helium
Amount of sweep gas: 300 mL/min
Relative humidity: 90%
Pressure: supply side = 155 kPa, permeation = 105 kPa

From Table 1, it is seen that the $CO_2$ separation membrane module according to the present disclosure has not only a large $CO_2$ permeation flux but also a high $CO_2$ selectivity and is, therefore, an excellent $CO_2$ separation membrane module.

[Table 1]

Table 1

| No. | ultrafiltration membrane module | | | | separation membrane module | | | | |
|---|---|---|---|---|---|---|---|---|---|
| | No. | molecular weight cut-off | air permeation flux GPU*1 | membrane inner diameter mm | No. | thickness of separation functional layer μm | air permeation flux (GPU*1) carbon dioxide | air permeation flux (GPU*1) nitrogen | α*2 |
| Example 1 | 1 | 10,000 | 29,000 | 0.36 | 1 | 0.7 | 141 | 0.54 | 191 |
| Example 2 | 2 | 10,000 | 61,000 | 0.64 | 2 | 0.8 | 129 | 0.71 | 142 |
| Comparative Example 1 | 3 | 10,000 | 6,700 | 0.64 | 3 | 0.3 | 76 | 0.73 | 89 |
| Comparative Example 2 | 4 | 10,000 | 7,200 | 0.70 | 4 | 0.3 | 89 | 0.91 | 84 |

*1: 1GPU=$7.5\times10^{-12}m^3(STP)/(m^2\cdot s\cdot Pa)$
*2: carbon dioxide selectivity coefficient

INDUSTRIAL APPLICABILITY

As described above, according to the present disclosure, the following can be provided: a carbon dioxide separation membrane that has a large carbon dioxide permeation flux and exhibits a high carbon dioxide selectivity; a method for producing the carbon dioxide separation membrane; a method for separating carbon dioxide using the carbon dioxide separation membrane; and a carbon dioxide separation membrane module using the carbon dioxide separation membrane. The carbon dioxide separation membrane and the carbon dioxide separation membrane module according to the present disclosure have excellent carbon dioxide separation characteristics; therefore, they are expected to enable low-cost separation and capture of carbon dioxide from exhaust gases of large-scale sources such as thermal power plants, steelworks blast furnaces, and cement factories. Further, since the separation membrane system is compact, it is expected to also enable efficient separation and capture of carbon dioxide from relatively small-scale carbon dioxide sources. In this manner, the carbon dioxide separation membrane according to the present disclosure is believed to greatly contribute to reduction of carbon dioxide emissions.

DESCRIPTION OF SYMBOLS

1: $CO_2$ gas cylinder
2: $N_2$ gas cylinder
3: helium gas cylinder
4: flow control meter
5: humidifier
6: pressure gauge
7: dew point meter
8: carbon dioxide separation membrane module
9: dehumidification trap
10: gas chromatograph

**Claims**

**1.** A carbon dioxide separation membrane, comprising:

a porous membrane having an air permeation flux of 10,000 GPU or more; and

a separation functional layer formed on a surface of the porous membrane,
wherein the separation functional layer is formed of a composition that comprises a water-soluble polymer having no crosslinked structure and an amine compound having molecular weight of 500 or less.

**2.** The carbon dioxide separation membrane according to claim 1, wherein the water-soluble polymer having no crosslinked structure is at least one selected from the group consisting of polyvinyl alcohol, poly(meth)acrylic acid, polyethylene glycol, polyvinylpyrrolidone, polyethyleneimine, polyallylamine, polysaccharides, and salts and copolymers thereof.

**3.** The carbon dioxide separation membrane according to claim 1 or 2, wherein the amine compound having molecular weight of 500 or less is at least one selected from the group consisting of a compound represented by the following Formula (1) and a compound represented by the following Formula (2):

[Chem. 1]

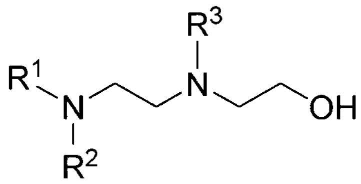

(1)

in Formula (1), $R^1$, $R^2$, and $R^3$ each independently represents a hydrogen atom, an alkyl group having 1 to 4 carbon atoms, or a hydroxyethyl group;

[Chem. 2]

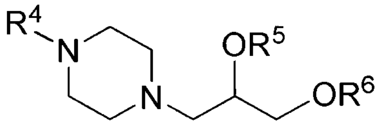

(2)

in Formula (2), $R^4$, $R^5$, and $R^6$ each independently represents a hydrogen atom or an alkyl group having 1 to 4 carbon atoms.

**4.** The carbon dioxide separation membrane according to any one of claims 1 to 3, wherein

the porous membrane is a hollow fiber membrane, and
the separation functional layer is formed on one or both of an outer surface and an inner surface of the hollow fiber membrane.

**5.** A method for producing the carbon dioxide separation membrane according to any one of claims 1 to 4, the method comprising:

the retention step of bringing a solution that comprises the water-soluble polymer having no crosslinked structure, the amine compound having molecular weight of 500 or less, and a solvent into contact with the porous membrane to retain the solution on a surface of the porous membrane; and
the drying step of removing the solvent from the solution retained on the porous membrane.

**6.** A method for separating carbon dioxide, the method comprising the separation step of bringing a mixed gas comprising carbon dioxide into contact with one end of the carbon dioxide separation membrane according to any one of claims 1 to 4, and allowing the carbon dioxide contained in the mixed gas to permeate to the other end side of the carbon dioxide separation membrane.

**7.** A carbon dioxide separation membrane module, comprising the carbon dioxide separation membrane according to any one of claims 1 to 4.

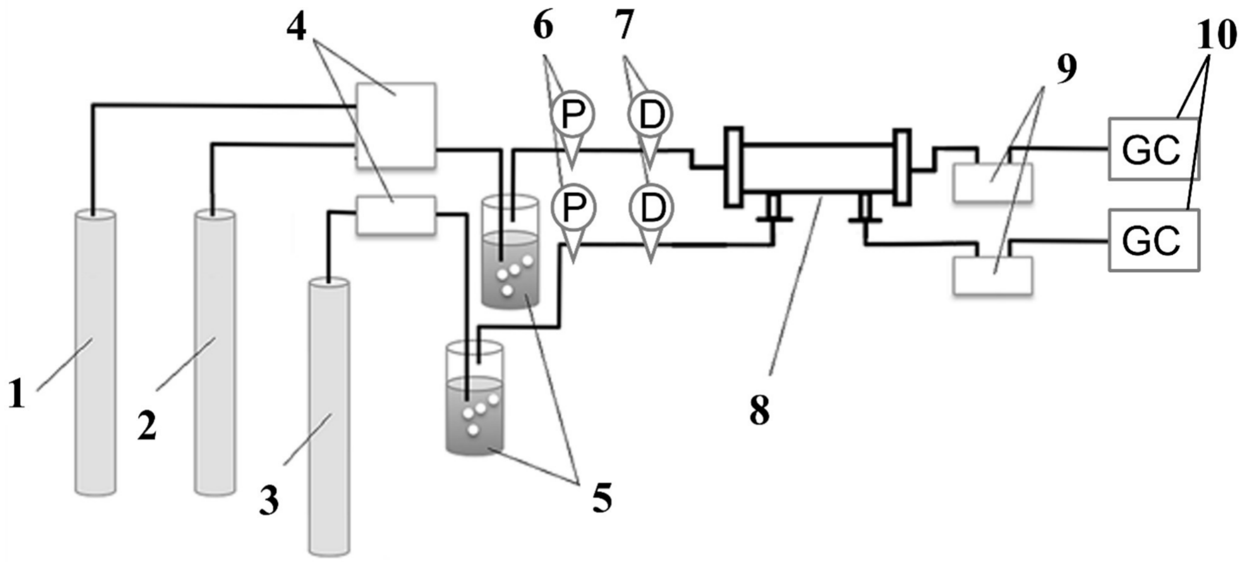
1
2
3
4
5
6
7
8
9
10
P
P
D
D
GC
GC

**INTERNATIONAL SEARCH REPORT**

International application No.
**PCT/JP2024/019003**

**A. CLASSIFICATION OF SUBJECT MATTER**

***B01D 69/02***(2006.01)i; ***B01D 69/00***(2006.01)i; ***B01D 69/10***(2006.01)i; ***B01D 69/12***(2006.01)i; ***B01D 71/08***(2006.01)i; ***B01D 71/38***(2006.01)i; ***B01D 71/40***(2006.01)i; ***B01D 71/44***(2006.01)i; ***B01D 71/52***(2006.01)i; ***B01D 71/60***(2006.01)i
FI: B01D69/02; B01D69/10; B01D69/12; B01D71/08; B01D71/38; B01D71/40; B01D71/52; B01D71/44; B01D71/60; B01D69/00 500

According to International Patent Classification (IPC) or to both national classification and IPC

**B. FIELDS SEARCHED**

Minimum documentation searched (classification system followed by classification symbols)

B01D61/00-71/82, B01D53/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-170356 A (MOLECULAR GATE MEMBRANE MODULE TECH RESEARCH ASSOCIATION) 28 September 2017 (2017-09-28) claim 1, paragraphs [0017]-[0099] | 1-2, 4-7 |
| Y | | 3-7 |
| Y | JP 2018-144022 A (TOSOH CORP.) 20 September 2018 (2018-09-20) paragraphs [0012]-[0018] | 3-7 |
| Y | JP 2017-159288 A (TOSOH CORP.) 14 September 2017 (2017-09-14) paragraphs [0012]-[0028] | 3-7 |
| A | JP 2001-120940 A (JAPAN SCIENCE AND TECHNOLOGY CORPORATION) 08 May 2001 (2001-05-08) | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/019003**

| Patent document cited in search report | Publication date (day/month/year) | Patent family member(s) | Publication date (day/month/year) |
| --- | --- | --- | --- |
| JP 2017-170356 A | 28 September 2017 | (Family: none) | |
| JP 2018-144022 A | 20 September 2018 | (Family: none) | |
| JP 2017-159288 A | 14 September 2017 | (Family: none) | |
| JP 2001-120940 A | 08 May 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2008036463 A
- JP 2018144022 A
- JP 2009185118 A

### Non-patent literature cited in the description

- New Developments in Gas Separation Technology. Toray Research Center Research and Development Department. Toray Research Center, Inc., 1990, 345-362
- *Journal of Membrane Science*, 2010, vol. 359 (1-2), 126-139